# EUROPÄISCHE PATENTSCHRIFT

(11) **EP 3 473 501 B1**
(45) Veröffentlichungstag und Bekanntmachung des Hinweises auf die Patenterteilung: **19.01.2022**
(21) Anmeldenummer: 18182143.0
(22) Anmeldetag: 27.09.2011
(51) Int. Cl.: B60R 21/264, B60R 21/263

(54) **GASGENERATOR UND GASSACKMODUL**
GAS GENERATOR AND AIRBAG MODUL
GÉNÉRATEUR DE GAZ ET MODULE COUSSIN GONFLABLE

(30) Priorität: 15.10.2010 DE 202010014286 U
(43) Veröffentlichungstag der Anmeldung: 24.04.2019
(62) Teilanmeldung aus: 11813864.3
(73) Patentinhaber: ZF Airbag Germany GmbH, 84544 Aschau a. Inn (DE)
(72) Erfinder: Bierwirth, Sebastian, 83562 Rechtmehring (DE); Hofmann, Achim, 84577 Tüßling (DE); Neumayer, Hans-Peter, 84539 Ampfing (DE); Spitzenberger, Dieter, 84559 Kraiburg (DE); Nuiding, Hannes, 73667 Kaisersbach (DE); Schober, Thomas, 83527 Haag (DE); Bommer, Josef, 83547 Babensham (DE); Breddermann, Tobias, 84513 Erharting (DE); Schwebel, Dietmar, 86179 Augsburg (DE)
(74) Vertreter: ZF Patentabteilung - DIPS

(56) Entgegenhaltungen:
- EP-A1- 1 136 330
- EP-A1- 1 669 257
- WO-A1-2010/063404
- DE-A1- 19 620 758

## Beschreibung

Die Erfindung betrifft einen Gasgenerator für eine Schutzeinrichtung in einem Fahrzeug nach dem Oberbegriff des Patentanspruchs 1. Die Erfindung betrifft ferner ein Gassackmodul für ein Fahrzeug.

Gasgeneratoren für Schutzeinrichtungen in einem Fahrzeug sind insbesondere dazu vorgesehen, bestimmte Teile anzutreiben (Aufstellen von Motorhauben, Straffen des Sicherheitsgurtes, Verschieben von Polstern oder dergleichen) oder Gassäcke aufzublasen, um einen Aufprall eines Fahrzeuginsassen auf harte Fahrzeugteile zu verhindern.

Die Anforderungen an die Effektivität eines Gasgenerators sind generell sehr hoch. In kürzester Zeit muss eine bestimmte Menge an Gas bereitgestellt werden, das nicht zu heiß und möglichst partikelfrei sein soll. Ein Gasgenerator sollte auch möglichst leicht sein und wenig Bauraum in Anspruch nehmen, damit z. B. im Falle des Einbaus in einem Lenkrad bestimmte Vorgaben des Lenkraddesigns eingehalten werden können.

Aus der Schrift EP 1 669 257 A1 ist ein Gasgenerator der eingangs genannten Art bekannt.

Die Erfindung schafft einen kompakten und effektiven Gasgenerator mit einem sehr effizienten Aufbau, der den obigen Anforderungen genügt.

Bei dem Gasgenerator der Erfindung umfasst der Gasgenerator eine umlaufende Wand und einen Filter, der wenigstens teilweise entlang der Wand verläuft. Die Wand weist wenigstens einen Stützabschnitt auf. Der Stützabschnitt bildet eine axiale Halterung für den Filter.

Erfindungsgemäß sind mehrere Stützabschnitte durch eingeprägte Sicken gebildet, die in Umfangsrichtung voneinander beabstandet sind und sich nicht über die gesamte Dicke des Filters nach innen erstrecken.

Vorteil dieser Wandhalterung für den Filter ist, dass sich der Filter im Inneren des Gasgenerators nicht unnötig über die gesamte Höhe erstrecken muss. Dadurch kann Filtermaterial eingespart werden, und es steht mehr Raum für Treibstoff in der vom Filter dann nur teilweise umgebenen Brennkammer zur Verfügung. Auf ein ansonsten notwendiges separates Stützelement kann verzichtet werden.

Gemäß einer bevorzugten Ausführungsform ist der Gasgenerator auf einer axialen Stirnseite durch einen Verschlusskörper geschlossen, und die Stützabschnitte sind in einem hochgezogenen Rand des Verschlusskörpers gebildet.

Eine vorteilhafte Ausgestaltung sieht vor, dass sich der Filter nur mit einem radial äußeren Bereich auf den Stützabschnitten abstützt.

Der Gasgenerator kann eine mit einem Treibstoff gefüllte erste Brennkammer umfassen, die einer ersten Aktivierungsstufe des Gasgenerators zugeordnet ist und auf einer Seite durch einen Deckel, insbesondere einen Diffusor geschlossen ist. Zwischen dem Treibstoff und dem Deckel ist ein erster Füllkörper angeordnet. Der erste Füllkörper weist wenigstens eine, vorzugsweise kreisförmige, Aussparung auf. In die Aussparung ragt eine Hülse hinein, insbesondere eine Anzünderhülse, die der ersten Aktivierungsstufe des Gasgenerators zugeordnet ist, oder eine Brennkammerhülse, die einer zweiten Aktivierungsstufe des Gasgenerators zugeordnet ist. Ein so gestalteter Füllkörper hat, abgesehen von der Erfüllung seines Hauptzwecks, mehrere Vorteile. So unterstützt er die Stabilität der in die Aussparung hineinragenden Hülse hinsichtlich einem unerwünschten Verschieben oder Kippen in seitlicher Richtung. Außerdem erlaubt die besondere Ausgestaltung des Füllkörpers eine in axialer Richtung äußerst kompakte Bauform, da die Hülse in den Füllkörper hineinragt, sodass der Raum zwischen der Hülse und dem Deckel minimiert werden kann.

Insbesondere bei einem zweistufigen Gasgenerator weist der erste Füllkörper gemäß einer bevorzugten Ausführungsform zwei Aussparungen unterschiedlicher Größe auf, wobei in die kleinere Aussparung vorzugsweise die Anzünderhülse und in die größere Aussparung vorzugsweise die Brennkammerhülse hineinragt.

Eine effiziente Ausgestaltung sieht vor, dass das Verhältnis des Durchmessers der größeren Aussparung zum Durchmesser der kleineren Aussparung zwischen 1,52 und 2,25, vorzugsweise zwischen 1,67 und 2,03 liegt und weiter vorzugsweise etwa 1,84 beträgt.

Die Herstellung des ersten Füllkörpers kann vereinfacht werden, indem der erste Füllkörper wenigstens zweiteilig ausgeführt wird. Ein weiterer Vorteil der zweiteiligen Ausführung besteht darin, dass beim Einbau des Füllkörpers größere Toleranzen ausgeglichen werden können als bei einer einstückige Ausführung des Füllkörpers.

Besonders zweckmäßig ist in diesem Fall ein Design, bei dem die zwei Teilkörper des ersten Füllkörpers jeweils die Form eines Doppelhalbmonds aufweisen. Die Füllkörper können dann identische Formen haben und symmetrisch zueinander angeordnet werden.

Das bevorzugte Material für den Füllkörper ist Silikon, das einerseits nachgiebig ist, um den Treibstoff zur Vermeidung von Geräuschen unter Druck festzuhalten. Andererseits reagiert das Silikon im Aktivierungsfall des Gasgenerators nicht in unerwünschter Weise mit dem Treibstoff oder mit Bauteilen des Gasgenerators.

Der Gasgenerator kann einen, bezogen auf eine Mittelachse des Gasgenerators, radial abstehenden Generatorflansch zur Befestigung des Gasgenerators an einem Generatorträger umfassen. Der Generatorflansch hat im Wesentlichen die Form eines Rechtecks. Die rechteckige Gestaltung des Generatorflanschs ermöglicht eine platzsparende Gestaltung des Generatorträgers und des den Gasgenerator umgebenden Bauraums, insbesondere dann, wenn der Flansch nur geringfügig breiter als der Außendurchmesser des Außengehäuses des Gasgenerators ist. Unter einer im Wesentlichen rechteckigen Form ist dabei nicht unbedingt ein perfektes Rechteck zu verstehen; grundsätzlich rechteckige Formen mit abgerundeten Ecken, randseitigen Ausnehmungen, etc. sollen mit umfasst sein.

Bei einem bevorzugten Design ist vorgesehen, dass der Gasgenerator ein Außengehäuse mit einem vorzugsweise kreisförmigen Querschnitt hat, dessen Mittelachse durch den Mittelpunkt des Generatorflanschs verläuft.

Bezüglich der Dimensionen des Generatorflanschs hat sich für die Anbringung des Gasgenerators am Generatorträger ein Verhältnis von Länge zu Breite des Rechtecks zwischen 1,12 und 1,31, vorzugsweise zwischen 1,16 und 1,27 als vorteilhaft herausgestellt. Weiter vorzugsweise beträgt dieses Verhältnis etwa 1,21.

Ebenfalls bevorzugt wird ein Verhältnis der Länge des Rechtecks zum Außendurchmesser des Außengehäuses, das zwischen 1,24 und 1,48, vorzugsweise zwischen 1,30 und 1,42 liegt und weiter vorzugsweise etwa 1,36 beträgt.

Bezüglich der Breite des Generatorflanschs wird ein Verhältnis der Breite des Rechtecks zum Außendurchmesser des Außengehäuses bevorzugt, das zwischen 1,01 und 1,23, vorzugsweise zwischen 1,06 und 1,17 liegt und weiter vorzugsweise etwa 1,12 beträgt.

Der Gasgenerator kann eine Anzündereinheit umfassen, die eine Markierung aufweist. Die Markierung erleichtert einen Einbau der Anzündereinheit, bei dem diese eine vorbestimmte Orientierung hat. Dies ist insbesondere vor dem Hintergrund vorteilhaft, dass die elektrischen Anschlusspins des Anzünders orientiert im Gasgenerator verbaut werden müssen, um später ein korrektes Aufstecken des Gegensteckers in die Schnittstelle/Kavität des Anzünderträgers der Anzündereinheit sicherzustellen. Das Werkzeug, welches beim Zusammenbau des Gasgenerators die vormontierte Anzündeinheit dem Gasgeneratorbauteil orientiert zuführt, in das die Anzündereinheit eingesetzt wird, muss hierzu nicht in die sensible Schnittstelle des Anzünderträgers "hineinfahren". Somit werden die empfindlichen Anschlusspins des Anzünders keinem unnötigen Werkzeugkontakt ausgesetzt.

Als Markierung bietet sich insbesondere eine Einfräsung an.

Eine vereinfachte Handhabung ergibt sich dadurch, dass die Anzündereinheit eine vormontierte Einheit mit einem Anzünderträger und einem darin gehaltenen Anzünder ist, die vorzugsweise in eine Bodenöffnung eines Verschlusskörpers des Gasgenerators einsetzbar ist.

Der Gasgenerator kann einen Diffusor umfassen, der mit einem Verschlusskörper ein vorzugsweise im Wesentlichen rotationssymmetrisches Außengehäuse des Gasgenerators bildet, wobei die Wanddicke des Verschlusskörpers wenigstens abschnittsweise größer als die des Diffusors ist. Dieser Aspekt beruht auf der Erkenntnis, dass eine höhere Wanddicke des Verschlusskörpers für die Aufnahme einer oder mehrerer Anzündereinheiten von Vorteil ist, während eine vergleichsweise dünne Wandstärke des Diffusors ein erwünschtes Ausbauchen des Diffusors im Aktivierungsfall ermöglicht.

Dementsprechend ist bei einer bevorzugten Gestaltung vorgesehen, dass der Verschlusskörper einen im Wesentlichen ebenen Boden aufweist, in dem vorzugsweise wenigstens eine Öffnung zur Aufnahme eines Anzünderträgers gebildet ist. Wenigstens der Boden hat eine größere Wanddicke als der Diffusor.

Der Gasgenerator kann ein eine Brennkammer wenigstens teilweise umschließendes Brennkammerbauteil umfassen, insbesondere eine Brennkammerhülse, und einen Diffusor mit einem Deckenabschnitt. Bezogen auf eine Mittelachse des Diffusors variiert der axiale Abstand zwischen dem Brennkammerbauteil und dem Deckenabschnitt. Bei einer symmetrischen Wölbung des Deckenabschnitts und einer bezüglich der Mittelachse senkrechten Anordnung des dem Deckenabschnitt gegenüberliegenden Abschnitts des Brennkammerbauteils entspricht dies einer bezüglich der Mittelachse versetzten Anordnung des Brennkammerbauteils.

Vorzugsweise berührt das Brennkammerbauteil den Deckenabschnitt des Diffusors in einem nicht aktivierten Zustand des Gasgenerators wenigstens an einer Stelle. Aufgrund des an den anderen Stellen vorhandenen Abstands zwischen dem Brennkammerbauteil und dem Deckenabschnitt wird dadurch ein Kippen des Brennkammerbauteils (Brennkammerhülse) ermöglicht, wie es gemäß der besonderen Funktionsweise der zweiten Aktivierungsstufe des Gasgenerators vorgesehen ist.

Das Kippen wird begünstigt durch eine Ausgestaltung, bei der der axiale Abstand zwischen dem Brennkammerbauteil und dem Deckenabschnitt des Diffusors an der Mittelachse des Diffusors am größten ist und sich mit zunehmendem radialem Abstand von der Mittelachse vorzugsweise stetig verringert.

Gemäß einer bevorzugten Ausführungsform liegt der maximale Abstand zwischen dem Brennkammerbauteil und dem Deckenabschnitt des Diffusors zwischen 2,3 und 3,7 mm, vorzugsweise zwischen 2,7 und 3,3 mm, und beträgt weiter vorzugsweise etwa 3,0 mm.

Ebenso kann eine versetzt zur Mittelachse des Diffusors angeordnete Anzünderhülse vorgesehen sein, deren axialer Abstand zum Deckenabschnitt des Diffusors in ähnlicher Weise variiert, insbesondere indem sich der axiale Abstand der Anzünderhülse vom Deckenabschnitt des Diffusors mit zunehmendem radialem Abstand von der Mittelachse des Diffusors vorzugsweise stetig verringert.

Gemäß einer bevorzugten Ausführungsform liegt der maximale Abstand zwischen der Anzünderhülse und dem Deckenabschnitt des Diffusors zwischen 2,1 und 3,5 mm, vorzugsweise zwischen 2,5 und 3,1 mm, und beträgt weiter vorzugsweise etwa 2,8 mm.

Der Gasgenerator kann eine erste Brennkammer umfassen, die einer ersten Aktivierungsstufe des Gasgenerators zugeordnet ist, und eine zweite Brennkammer, die einer zweiten Aktivierungsstufe des Gasgenerators zugeordnet ist. Die zweite Brennkammer ist wenigstens teilweise von der ersten Brennkammer umgeben und weist ein kleineres Volumen als die erste Brennkammer auf. Diese Anordnung und Dimensionierung der Brennkammern ermöglicht einen auch in radialer Richtung äußerst kompakten Aufbau eines zweistufigen Gasgenerators.

Eine effiziente Ausgestaltung sieht vor, dass das Verhältnis des Volumens der ersten Brennkammer zum Volumen der zweiten Brennkammer zwischen 2,07 und 3,78, vorzugsweise zwischen 2,41 und 3,21 liegt und weiter vorzugsweise etwa 2,82 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 9,00 und 35,0, vorzugsweise zwischen 11,6 und 22,0 liegt und weiter vorzugsweise etwa 15,5 beträgt.

Die obigen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 1,38 und 1,78 liegt und weiter vorzugsweise etwa 1,57 beträgt.

Ein solcher Gasgenerator, dessen Bauhöhe, insbesondere die axiale Höhe eines Außengehäuses des Gasgenerators, zwischen 30 und 50 mm liegt und vorzugsweise etwa 40 mm beträgt, ist besonders geeignet für ein Fahrergassackmodul in einem Fahrzeug, mit einem Gassack, der ein Volumen von 40 bis 60 Liter aufweist.

Eine andere effiziente Ausgestaltung sieht vor, dass das Verhältnis des Volumens der ersten Brennkammer zum Volumen der zweiten Brennkammer zwischen 2,34 und 3,27, vorzugsweise zwischen 2,54 und 3,00 liegt und weiter vorzugsweise etwa 2,76 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 13,5 und 31,0, vorzugsweise zwischen 16,0 und 24,0 liegt und weiter vorzugsweise etwa 19,3 beträgt.

Die zuletzt angegebenen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 0,94 und 1,16 liegt und weiter vorzugsweise etwa 1,05 beträgt.

Ein solcher Gasgenerator, dessen Bauhöhe, insbesondere die axiale Höhe eines Außengehäuses des Gasgenerators, zwischen 50 und 70 mm liegt und vorzugsweise etwa 60 mm beträgt, ist besonders geeignet für ein Beifahrergassackmodul in einem Fahrzeug, mit einem Gassack, der ein Volumen von 60 bis 135 Liter aufweist.

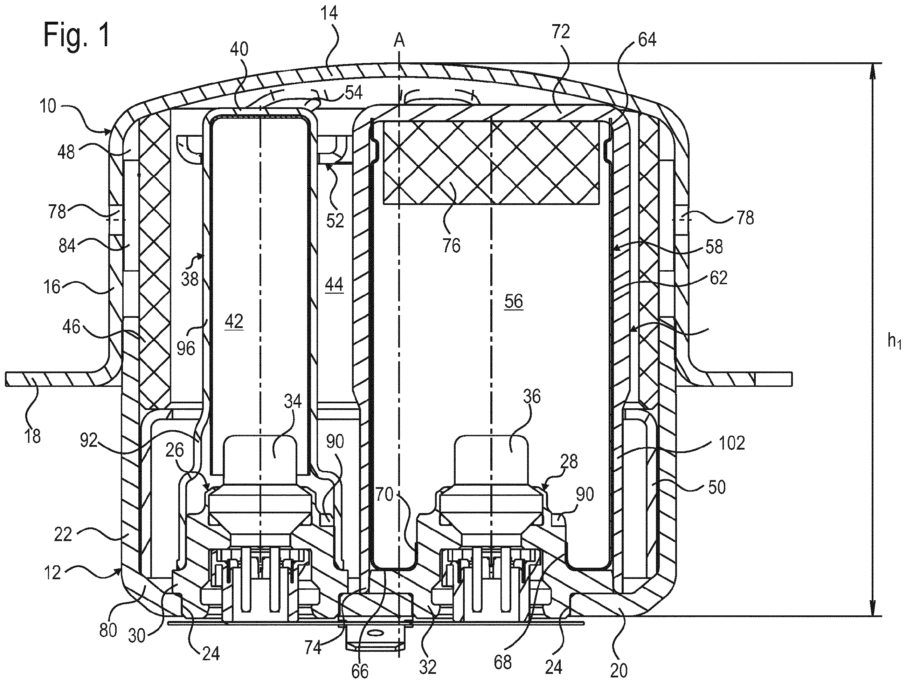

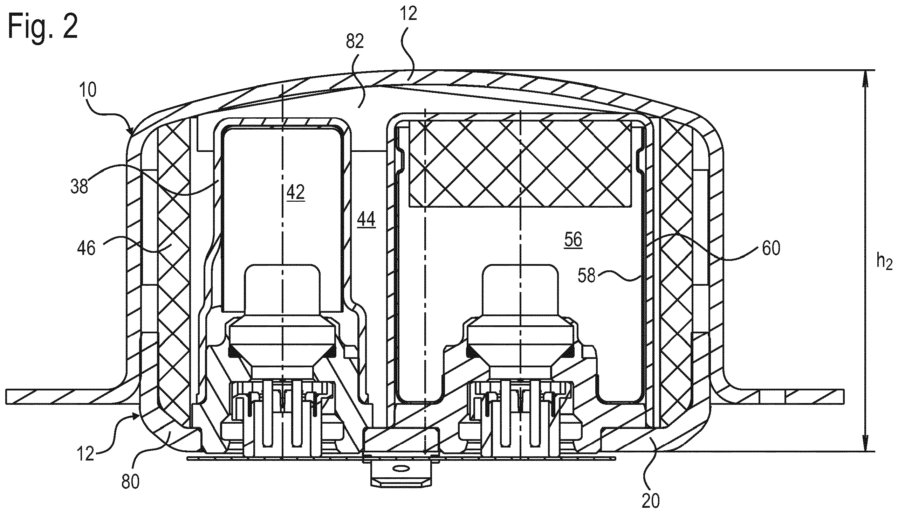

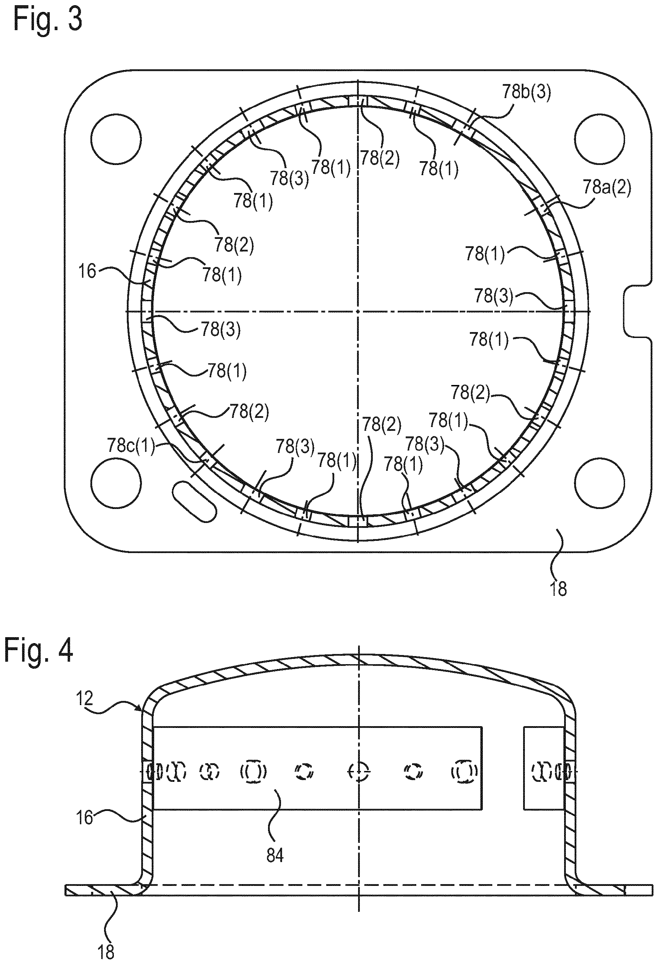

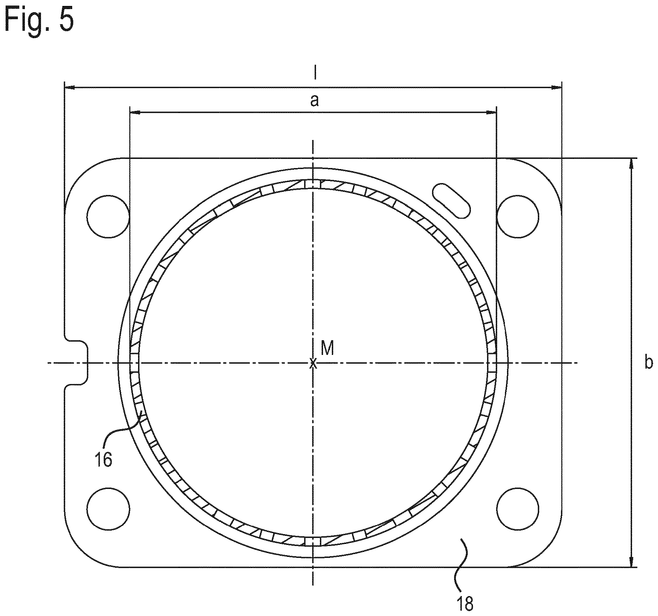

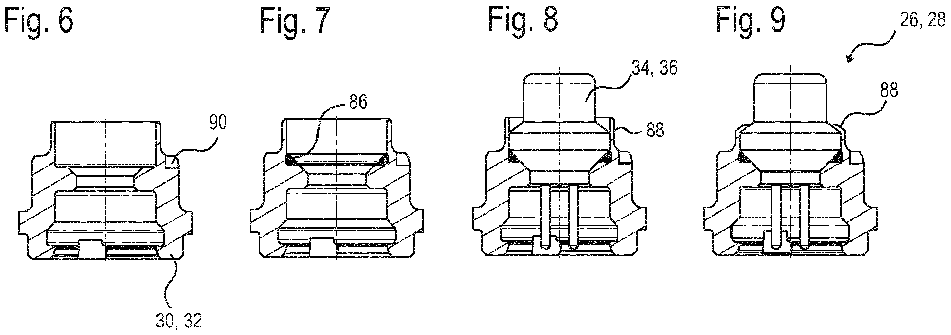

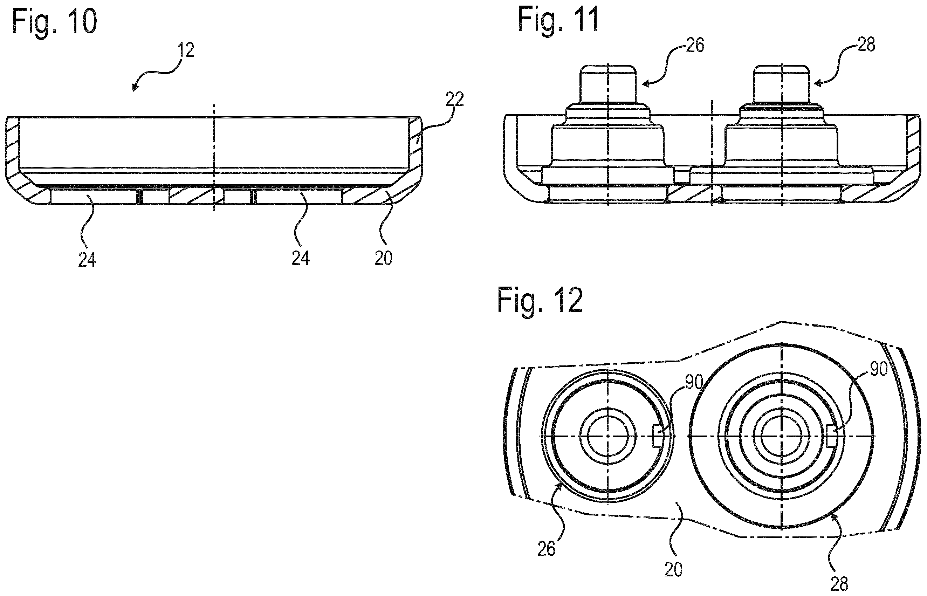

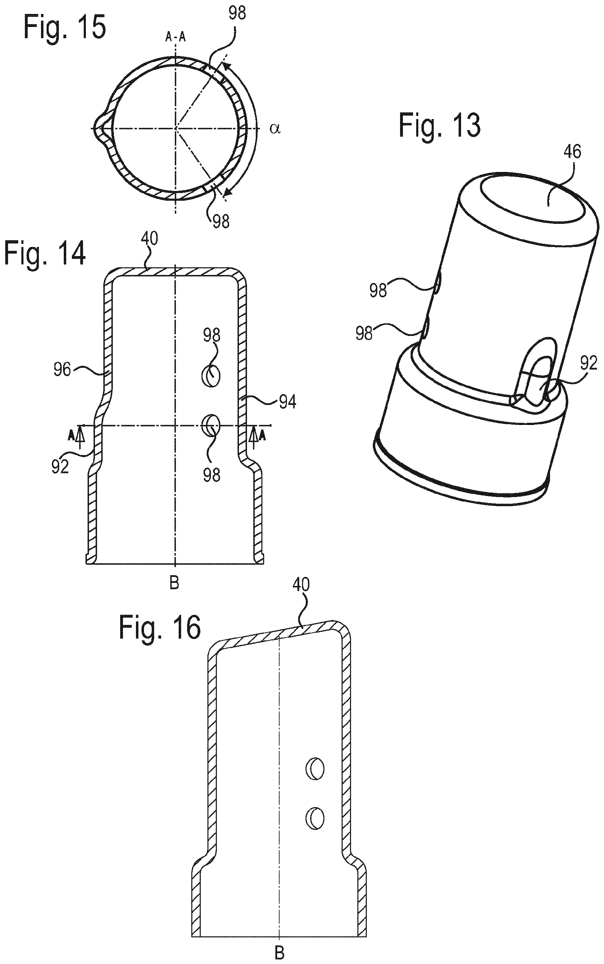

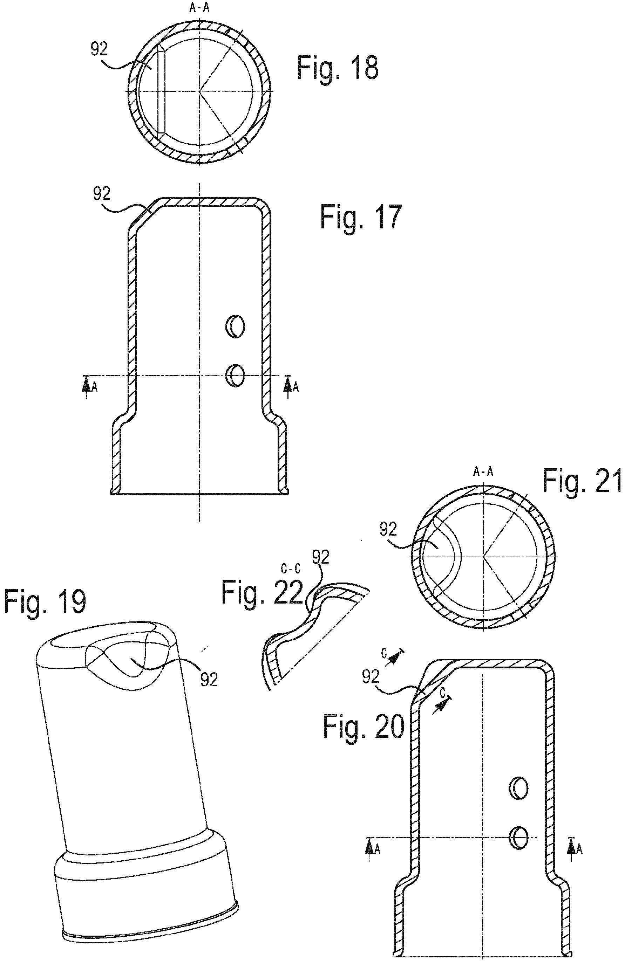

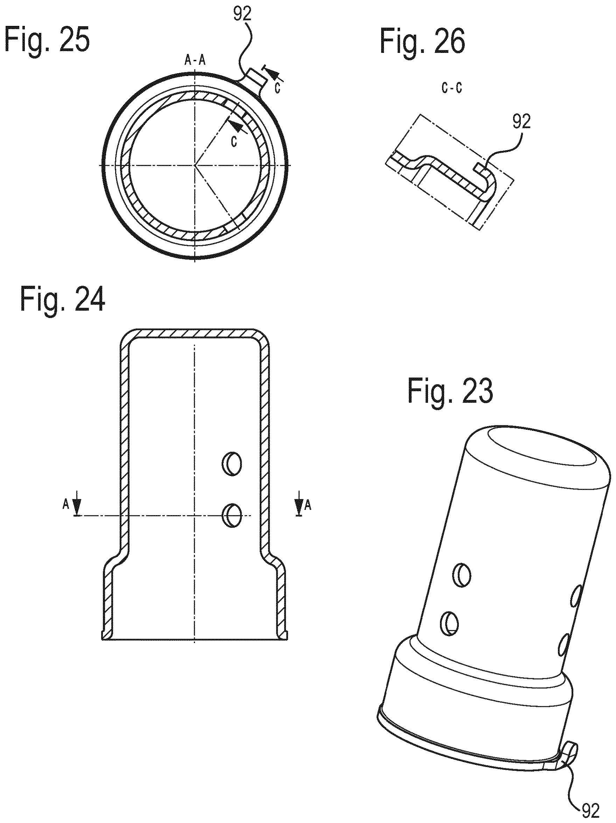

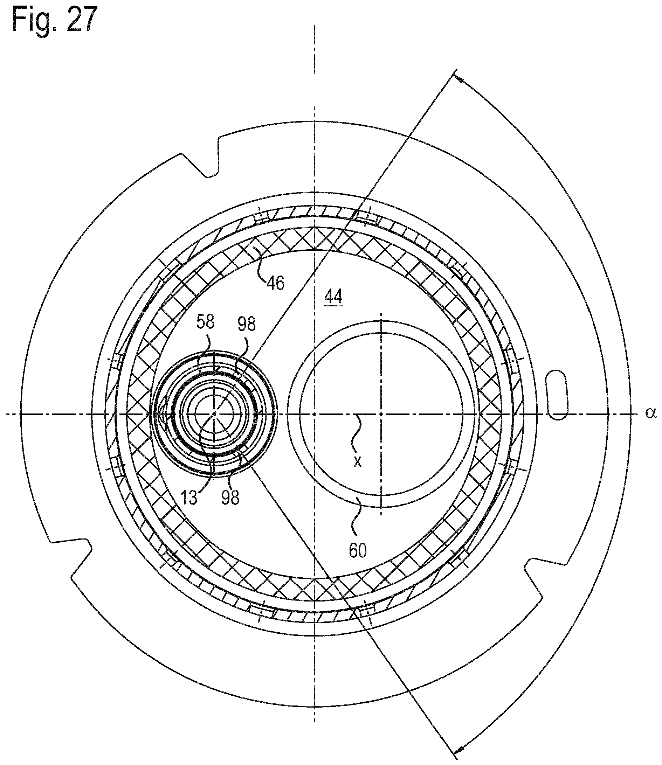

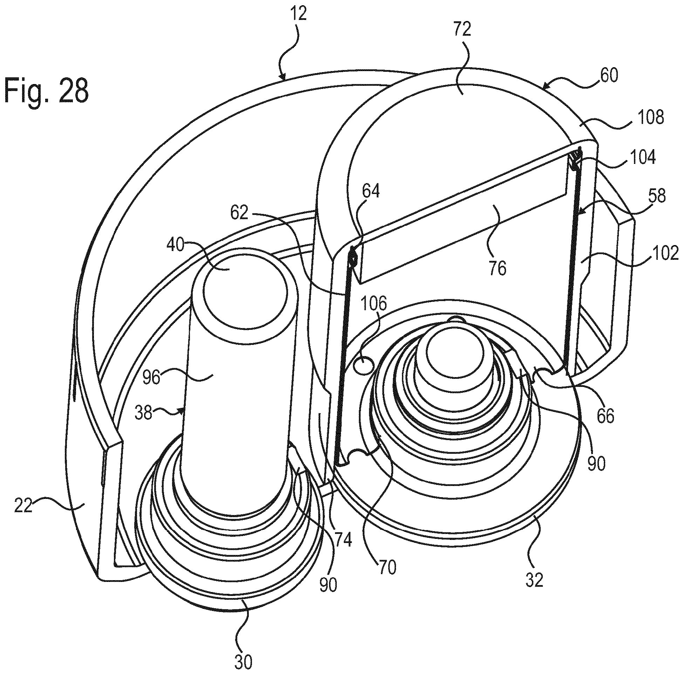

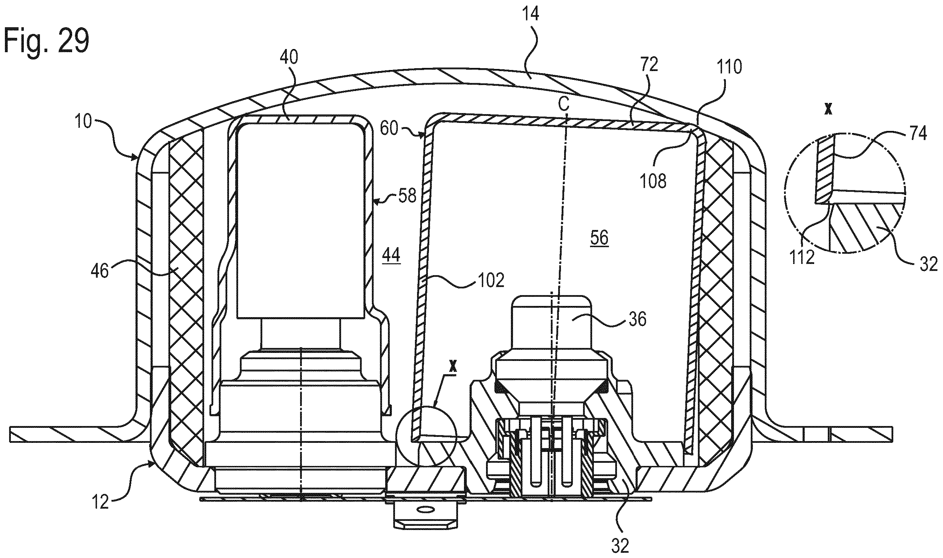

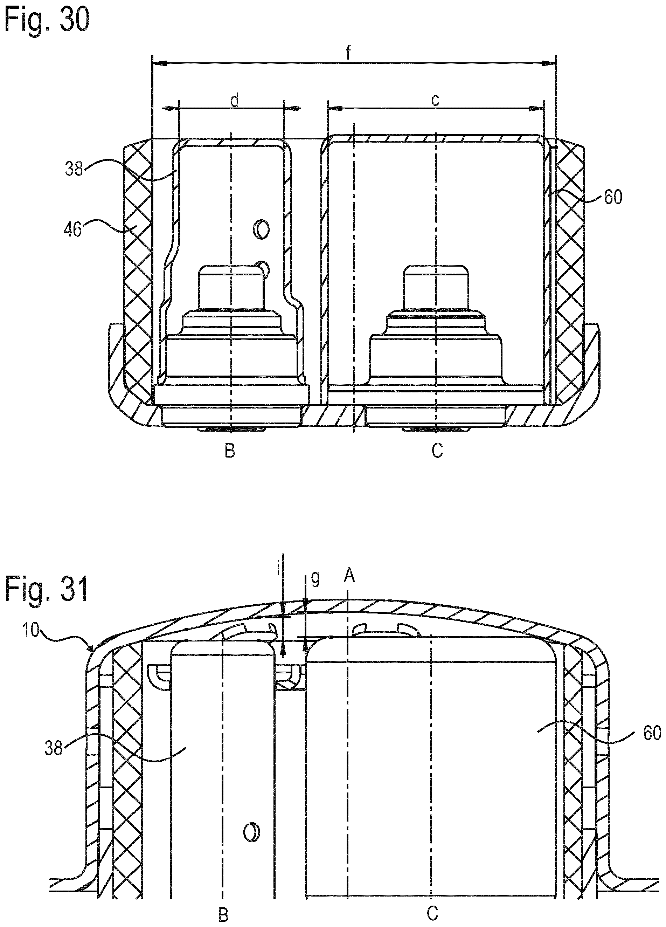

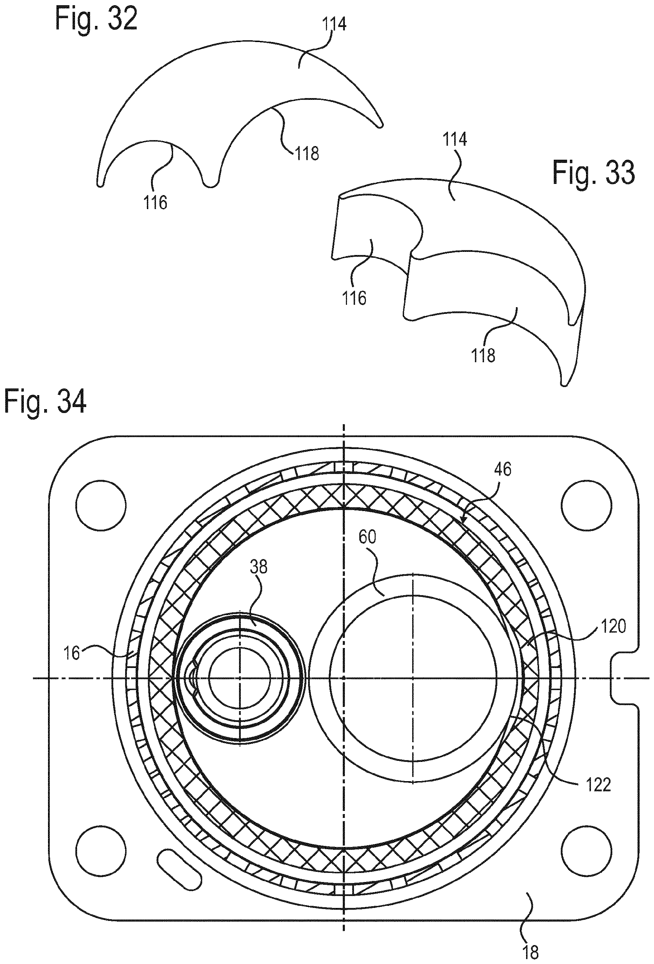

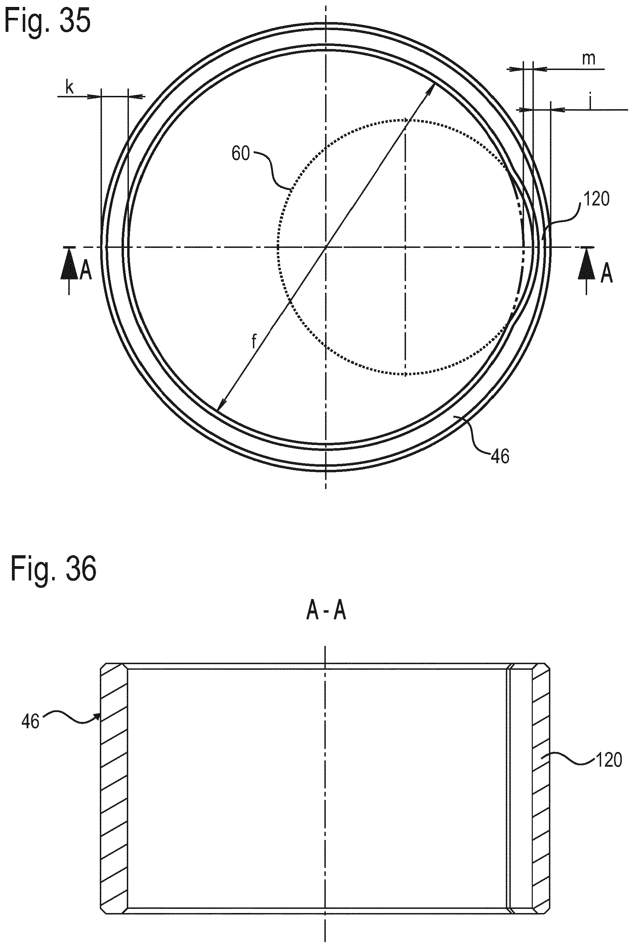

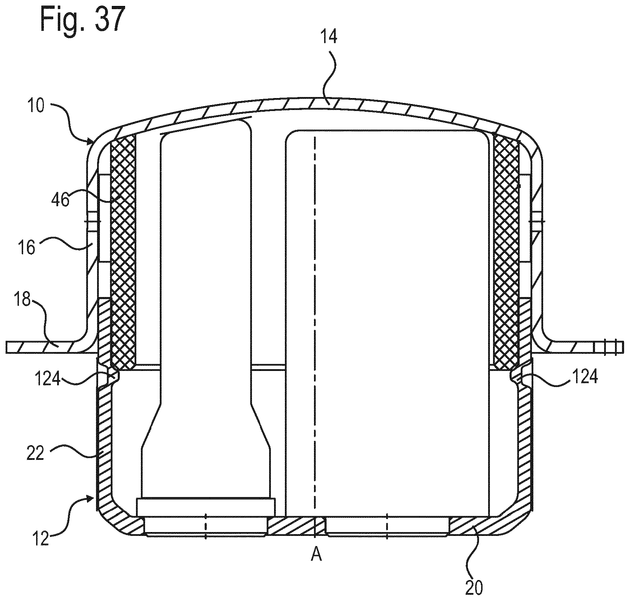

## Patentansprüche

1. Gasgenerator für eine Schutzeinrichtung in einem Fahrzeug mit einer umlaufenden Wand (16, 22) und einem Filter (46), der wenigstens teilweise entlang der Wand (16, 22) verläuft, wobei die Wand (16, 22) wenigstens einen Stützabschnitt (124) aufweist, der eine axiale Halterung für den Filter (46) bildet, **dadurch gekennzeichnet, dass** mehrere Stützabschnitte (124) durch eingeprägte Sicken gebildet sind, die in Umfangsrichtung voneinander beabstandet sind und sich nicht über die gesamte Dicke des Filters (46) nach innen erstrecken.

2. Gasgenerator nach Anspruch 1, **dadurch gekennzeichnet, dass** der Gasgenerator auf einer axialen Stirnseite durch einen Verschlusskörper (12) geschlossen ist und die Stützabschnitte (124) in einem hochgezogenen Rand (22) des Verschlusskörpers (12) gebildet sind.

3. Gasgenerator nach zumindest einem der voranstehenden Ansprüche, **dadurch gekennzeichnet, dass** sich der Filter (46) nur mit einem radial äußeren Bereich auf den Stützabschnitten (124) abstützt.

4. Gasgenerator nach Anspruch 2, **dadurch gekennzeichnet, dass** der Gasgenerator einen Diffusor (10) hat, der mit dem Verschlusskörper (12) ein im Wesentlichen rotationssymmetrisches Außengehäuse des Gasgenerators bildet, wobei die Wanddicke des Verschlusskörpers (12) wenigstens abschnittsweise größer als die des Diffusors (10) ist, wobei der Verschlusskörper (12) einen im Wesentlichen ebenen Boden (20) aufweist, in dem wenigstens eine Öffnung (24) zur Aufnahme eines Anzünderträgers (30, 32) gebildet ist, und wenigstens der Boden (20) eine größere Wanddicke als der Diffusor (10) hat.

5. Gasgenerator nach zumindest einem der vorhergehenden Ansprüche, mit einer ersten Brennkammer (44), die einer ersten Aktivierungsstufe des Gasgenerators zugeordnet ist, und einer zweiten Brennkammer (56), die einer zweiten Aktivierungsstufe des Gasgenerators zugeordnet ist, wobei die zweite Brennkammer (56) wenigstens teilweise von der ersten Brennkammer (44) umgeben ist und ein kleineres Volumen als die erste Brennkammer (44) aufweist, **dadurch gekennzeichnet, dass** das Verhältnis des Volumens der ersten Brennkammer (44) zum Volumen der zweiten Brennkammer (56) zwischen 2,07 und 3,78, vorzugsweise zwischen 2,41 und 3,21 liegt und weiter vorzugsweise etwa 2,82 beträgt.

6. Gasgenerator nach zumindest einem der vorhergehenden Ansprüche, **dadurch gekennzeichnet, dass** das Verhältnis des Volumens einer/der ersten Brennkammer (44) zum Volumen einer von der ersten Brennkammer (44) wenigstens teilweise umgebenden Anzünderhülse (38) zwischen 9,00 und 35,0, vorzugsweise zwischen 11,6 und 22,0 liegt und weiter vorzugsweise etwa 15,5 beträgt.

7. Gasgenerator nach zumindest einem der vorhergehenden Ansprüche, **dadurch gekennzeichnet, dass** das Verhältnis des Außendurchmessers a eines Außengehäuses des Gasgenerators zur Höhe h₂ des Außengehäuses zwischen 1,38 und 1,78 liegt und weiter vorzugsweise etwa 1,57 beträgt.

8. Gasgenerator nach zumindest einem der vorhergehenden Ansprüche **dadurch gekennzeichnet, dass** die Bauhöhe des Gasgenerators zwischen 30 und 50 mm liegt und vorzugsweise etwa 40 mm, insbesondere 42 mm, beträgt.

9. Gasgenerator nach zumindest einem der vorhergehenden Ansprüche, mit einer Anzünderhülse (38), die einen Anzünder (34) und eine insbesondere mit einer Verstärkerladung gefüllte Anzünderkammer (42) wenigstens teilweise umschließt und an eine einer ersten Aktivierungsstufe des Gasgenerators zugeordnete erste Brennkammer (44) angrenzt, sowie einer Brennkammerhülse (60), die eine mit Treibstoff gefüllte, einer zweiten Aktivierungsstufe des Gasgenerators zugeordnete zweite Brennkammer (56) wenigstens teilweise umschließt, und wobei beide Hülsen (38, 60) nebeneinander angeordnet sind, **dadurch gekennzeichnet, dass** der Abstand zwischen einer Mittelachse B der Anzünderhülse (38) und einer Mittelachse C der Brennkammerhülse (60) zwischen 22,5 und 27,5 mm, vorzugsweise zwischen 23,5 und 26,5 mm liegt und weiter vorzugsweise etwa 25 mm beträgt.

10. Gasgenerator nach Anspruch 9, **dadurch gekennzeichnet, dass** das Verhältnis des minimalen Innendurchmessers c der Brennkammerhülse zum minimalen Innendurchmesser d der Anzünderhülse zwischen 1,64 und 2,63, vorzugsweise zwischen 1,83 und 2,32 liegt und weiter vorzugsweise etwa 2,06 beträgt.

11. Gasgenerator nach zumindest einen der voranstehenden Ansprüche 9 bis 11, **dadurch gekennzeichnet, dass** die erste Brennkammer (44), bezogen auf eine Mittelachse A des Gasgenerators, radial wenigstens teilweise durch einen/den wenigstens teilweise umlaufenden Filter (46) begrenzt ist, wobei das Verhältnis des Innendurchmessers f des Filters (46) zum minimalen Innendurchmesser d der Anzünderhülse (38) zwischen 3,19 und 4,76, vorzugsweise zwischen 3,50 und 4,27 liegt und weiter vorzugsweise etwa 3,85 beträgt

12. Gassackmodul für ein Fahrzeug, mit einem Gassack, der ein Volumen von 40 bis 60 Liter aufweist, **gekennzeichnet durch** einen Gasgenerator nach einem der Ansprüche 1 bis 11.

13. Gassackmodul für ein Fahrzeug, mit einem Gassack, der ein Volumen von 60 bis 135 Liter aufweist, **gekennzeichnet durch** einen Gasgenerator nach einem der Ansprüche 1 bis 11.

## Claims

1. An inflator for a protection device in a vehicle, comprising a circumferential wall (16, 22) and a filter (46) which extends at least partially along the wall (16, 22), wherein the wall (16, 22) has at least one supporting portion (124) which constitutes an axial support for the filter (46), **characterized in that** plural supporting portions (124) are formed by embossed beads which are spaced apart in circumferential direction and do not extend inwardly over the entire thickness of the filter (46).

2. The inflator according to claim 1, **characterized in that** the inflator is closed at an axial end face by a closing member (12) and the supporting portions (124) are formed in a pulled up edge (22) of the closing member (12).

3. The inflator according to at least one of the preceding claims, **characterized in that** the filter (46) is supported on the supporting portions (124) by a radially outer area only.

4. The inflator according to claim 2, **characterized in that** the inflator comprises a diffuser (10) which forms a substantially rotation-symmetric external housing of the inflator with the closing member (12), wherein at least in portions the wall thickness of the closing member (12) is larger than that of the diffuser (10), wherein the closing member (12) has a substantially plane bottom (20) in which at least one opening (24) for receiving the igniter carrier (30, 32) is formed and at least the bottom (20) has a larger wall thickness than the diffuser (10).

5. The inflator according to at least one of the preceding claims, comprising a first combustion chamber (44) which is associated with a first activating stage of the inflator and a second combustion chamber (56) which is associated with a second activating stage of the inflator, wherein the second combustion chamber (56) is at least partially surrounded by the first combustion chamber (44) and has a smaller volume than the first combustion chamber (44), **characterized in that**, the ratio of the volume of the first combustion chamber (44) to the volume of the second combustion chamber (56) is between 2.07 and 3.78, preferably between 2.41 and 3.21 and further preferably amounts to approx. 2.82.

6. The inflator according to at least one of the preceding claims, **characterized in that** the ratio of the volume of one/ the first combustion chamber (44) to the volume of an igniter sleeve (38) at least partially surrounded by the first combustion chamber (44) is between 9.00 and 35.0, preferably between 11.6 and 22.0 and further preferably amounts to approx. 15.5.

7. The inflator according to at least one of the preceding claims, **characterized in that** the ratio of the outer diameter a of an external housing of the inflator to the height h₂ of the external housing is between 1.38 and 1.78 and further preferably amounts to approx. 1.57.

8. The inflator according to at least one of the preceding claims, **characterized in that** the construction height of the inflator ranges between 30 and 50 mm and preferably amounts to approx. 40 mm, especially 42 mm.

9. The inflator according to at least one of the preceding claims, comprising an igniter sleeve (38) which at least partially encloses an igniter (34) and an igniter chamber (42) especially filled with a boosting charge and is adjacent to a first combustion chamber (44) which is associated with a first activating stage of the inflator as well as a combustion chamber sleeve (60) which at least partially encloses a second combustion chamber (56) filled with fuel which is associated with a second activating stage of the inflator, and wherein both sleeves (38, 60) are juxtaposed, **characterized in that** the distance between the central axis B of the igniter sleeve (38) and a central axis C of the combustion chamber sleeve (60) ranges between 22.5 and 27.5 mm, preferably between 23.5 and 26.5 mm and further preferably amounts to approx. 25 mm.

10. The inflator according to claim 9, **characterized in that** the ratio of the minimum inner diameter c of the combustion chamber sleeve to the minimum inner diameter d of the igniter sleeve is between 1.64 and 2.63, preferably between 1.83 and 2.32 and further preferably amounts to approx. 2.06.

11. The inflator according to at least one of the preceding claims 9 to 11, **characterized in that** the first combustion chamber (44) related to a central axis A of the inflator is radially confined at least partially by an/the at least partly circumferential filter (46), the ratio of the inner diameter f of the filter (46) to the minimum inner diameter d of the igniter sleeve (38) ranging between 3.19 and 4.76, preferably between 3.50 and 4.27 and further preferably being approx. 3.85.

12. An airbag module for a vehicle comprising an airbag having a volume of 40 to 60 liters, **characterized by** an inflator according to any one of the claims 1 to 11.

13. The airbag module for a vehicle comprising an airbag having a volume of 60 to 135 liters, **characterized by** an inflator according to any one of the claims 1 to 11.

## Revendications

1. Générateur de gaz pour un dispositif de protection dans un véhicule avec une paroi périphérique (16, 22) et un filtre (46) qui s'étend au moins partiellement le long de la paroi (16, 22), pour lequel la paroi (16, 22) présente au moins une zone d'appui (124) qui forme une fixation axiale pour le filtre (46), **caractérisé en ce que** plusieurs zones d'appui (124) sont formées par des nervures estampées qui sont espacées les unes des autres dans la direction périphérique et qui ne s'étendent pas vers l'intérieur sur toute l'épaisseur du filtre (46).

2. Générateur de gaz selon la revendication 1, **caractérisé en ce que** le générateur de gaz est fermé sur une face frontale axiale par un corps de fermeture (12) et **en ce que** les zones d'appui (124) sont formées dans un bord relevé (22) du corps de fermeture (12).

3. Générateur de gaz selon au moins l'une des revendications précédentes, **caractérisé en ce que** le filtre (46) ne s'appuie que par une zone radialement extérieure sur les sections d'appui (124).

4. Générateur de gaz selon la revendication 2, **caractérisé en ce que** le générateur de gaz a un diffuseur (10), lequel forme avec le corps de fermeture (12) un boîtier extérieur du générateur de gaz sensiblement symétrique en rotation, pour lequel l'épaisseur de paroi du corps de fermeture (12) est au moins par sections, supérieure à celle du diffuseur (10), pour lequel le corps de fermeture (12) présente un fond (20) sensiblement plan, dans lequel est formée au moins une ouverture (24) destinée à recevoir un support d'allumeur (30, 32), et le fond (20) a au moins une épaisseur de paroi supérieure à celle du diffuseur (10)

5. Générateur de gaz selon au moins l'une des revendications précédentes, comprenant une première chambre de combustion (44) associée à un premier étage d'activation du générateur de gaz, et une deuxième chambre de combustion (56) associée à un deuxième étage d'activation du générateur de gaz, pour lequel la deuxième chambre de combustion (56) est au moins partiellement entourée par la première chambre de combustion (44) et présente un volume plus petit que la première chambre de combustion (44), **caractérisé en ce que** le rapport du volume de la première chambre de combustion (44) au volume de la deuxième chambre de combustion (56) est compris entre 2,07 et 3,78, de préférence entre 2,41 et 3,21, et de préférence encore est d'environ 2,82.

6. Générateur de gaz selon au moins l'une des revendications précédentes, **caractérisé en ce que** le rapport du volume d'une/des première(s) chambre(s) de combustion (44) sur le volume d'un étui d'allumage (38) entouré au moins partiellement par la première chambre de combustion (44) est compris entre 9,00 et 35,0, de préférence entre 11,6 et 22,0, et est plus préférentiellement d'environ 15,5.

7. Générateur de gaz selon au moins l'une des revendications précédentes, **caractérisé en ce que** le rapport entre le diamètre extérieur a d'un boîtier extérieur du générateur de gaz et la hauteur h₂ du boîtier extérieur est compris entre 1,38 et 1,78, et est de préférence d'environ 1,57.

8. Générateur de gaz selon au moins l'une des revendications précédentes, **caractérisé en ce que** la hauteur du générateur de gaz est comprise entre 30 et 50 mm et est de préférence d'environ 40 mm, en particulier de 42 mm.

9. Générateur de gaz selon au moins l'une des revendications précédentes, comprenant un étui d'allumage (38) qui entoure au moins partiellement un allumeur (34) et une chambre d'allumage (42) remplie en particulier d'une charge renforçatrice, et qui est adjacente à une première chambre de combustion (44) associée à un premier étage d'activation du générateur de gaz, ainsi qu'un étui de chambre de combustion (60) qui est rempli de propergol et qui entoure au moins partiellement une deuxième chambre de combustion (56) associée à un deuxième étage d'activation du générateur de gaz, pour lequel les deux étuis (38, 60) sont disposés l'un à côté de l'autre, **caractérisé en ce que** la distance entre un axe central B de l'étui d'allumage (38) et un axe central C de l'étui de la chambre de combustion (60) est comprise entre 22,5 et 27,5 mm, de préférence entre 23,5 et 26,5 mm, et est plus préférentiellement d'environ 25 mm

10. Générateur de gaz selon la revendication 9, **caractérisé en ce que** le rapport entre le diamètre intérieur minimal c de l'étui de la chambre de combustion et le diamètre intérieur minimal d de l'étui d'allumage est compris entre 1,64 et 2,63, de préférence entre 1,83 et 2,32, et est plus préférentiellement d'environ 2,06.

11. Générateur de gaz selon au moins l'une des revendications 9 à 11 précédentes, **caractérisé en ce que** la première chambre de combustion (44) est délimitée radialement au moins partiellement, par rapport à un axe central A du générateur de gaz, par un/des filtre(s) (46) au moins partiellement périphérique(s), pour lequel le rapport du diamètre intérieur f du filtre (46) au diamètre intérieur minimal d de l'étui d'allumage (38) est compris entre 3,19 et 4,76, de préférence entre 3,50 et 4,27, et est plus préférentiellement d'environ 3,85.

12. Module airbag pour un véhicule, comprenant un coussin gonflable qui présente un volume de 40 à 60 litres, **caractérisé par** un générateur de gaz selon l'une des revendications 1 à 11.

13. Module airbag pour un véhicule, comprenant un coussin gonflable qui présente un volume de 60 à 135 litres, **caractérisé par** un générateur de gaz selon l'une des revendications 1 à 11.
